(19) Europäisches Patentamt
European Patent Office
Office européen des brevets

(11) EP 0 787 157 B1

(12) EUROPEAN PATENT SPECIFICATION

(45) Date of publication and mention of the grant of the patent: **20.12.2000 Bulletin 2000/51**

(21) Application number: **95936308.6**

(22) Date of filing: **06.10.1995**

(51) Int Cl.[7]: **C08F 8/46**, C10M 145/00, C08F 255/08, C08F 257/02, C08F 8/00

(86) International application number: **PCT/US95/13096**

(87) International publication number: **WO 96/11959 (25.04.1996 Gazette 1996/18)**

# (54) OLEAGINOUS COMPOSITIONS COMPRISING GRAFTED ISOMONOOLEFIN ALKYLSTYRENE POLYMERS

ÖLZUSAMMENSETZUNG, ENTHALTEND PFROPFPOLYMERE AUS ISOOLEFINEN UND ALKYLSTYROLEN

COMPOSITIONS OLEAGINEUSES RENFERMANT DES POLYMERES GREFFES D'ISOMONO-OLEFINE ET DE PARA-ALKYLSTYRENE

(84) Designated Contracting States: **DE FR GB IT**

(30) Priority: **17.10.1994 US 323965**

(43) Date of publication of application: **06.08.1997 Bulletin 1997/32**

(73) Proprietor: **Infineum USA L.P.**
**Linden, New Jersey 07036 (US)**

(72) Inventors:
- **WHITE, Donald, A.**
  **Keasbey, NJ 08832 (US)**
- **WANG, Hsien-Chang**
  **Bellaire, TX 77401 (US)**

(74) Representative: **Mansell, Keith Rodney**
**Infineum UK Ltd,**
**Law Department,**
**Milton Hill,**
**PO Box 1**
**Abingdon, Oxfordshire OX13 6BB (GB)**

(56) References cited:
**WO-A-89/01962**
**WO-A-91/04992**
**WO-A-91/07451**
**WO-A-92/16569**
**WO-A-94/13718**
**GB-A- 2 231 873**
**US-A- 4 471 091**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### BACKGROUND OF THE INVENTION

This invention relates to improved oil soluble polymeric dispersant additives useful in oleaginous compositions, particularly oleaginous lubricating oil compositions, which additives are derived from grafted polymers of an isomonoolefin and an alkylstyrene. The additives comprise copolymers functionalized at reactive sites on the polymer chains (free-radically grafted) with acid-producing moieties, which may then be reacted with a nucleophilic post-treating reactant, and, where appropriate, with a chain-stopping or end-capping co-reactant to ensure that the grafted and post-reacted product mixture is gel-free.

Ashless ester and nitrogen containing lubricating oil dispersants have been widely used by the industry. Typically, these dispersants are prepared from a long chain hydrocarbon polymer, such as polyisobutylene (PIB) by reacting the polymer with maleic anhydride to form the corresponding polymer which is substituted with succinic anhydride groups. Such PIB generally contains residual unsaturation in amounts of about one ethylenic double bond per polymer chain, positioned along the chain.

The polyisobutylene polymers (PIB) employed in most conventional dispersants are based on a hydrocarbon chain of a number-average molecular weight ($M_n$) of from about 900 to 2500. PIB having a $M_n$ of less than about 300 gives rather poor performance results when employed in dispersants because the molecular weight is insufficient to keep the dispersant molecule fully solubilized in lubricating oils. Increased amounts of terminal ethylenic unsaturation in polyisobutylene (so-called "reactive polyisobutylene") has been achieved by $BF_3$ catalyzed polymerization of isobutylene. However, such reactive polyisobutylene materials can still contain substantial amounts of unsaturation elsewhere along the chain. Further, it is difficult to produce such reactive polyisobutylene polymers at molecular weights of greater than about 2,000.

Other polymers, such as ethylene-alpha-olefin (EAO) interpolymers, (e.g., ethylene-propylene copolymers and terpolymers containing non-conjugated dienes), have been disclosed as suitable polymers for the preparation of ashless dispersants. High molecular weight EAO copolymers and terpolymers, e.g., of from 20,000 to 300,000, find use as viscosity index improvers.

EP-A-171167 discloses a process for grafting oil soluble hydrocarbon polymers or copolymers of $M_n$ from 5,000 to 500,000 with an ethylenically unsaturated $C_3$-$C_{10}$ carboxylic acid having 1 to 2 carboxylic acid groups or an anhydride group in the presence of a free radical initiator and a chain stopping agent.

US-A- 4557847 teaches polymeric viscosity index improver-dispersant additives for lubricating oils produced by reacting an ethylene-alpha-olefin copolymer grafted with an ethylenically unsaturated carboxylic material having 1 or 2 carboxyllc acid groups or anhydride groups, preferably maleic anhydride, with an alkylene or oxyalkylene amine having at least two primary amine groups and a branched chain acid. The ethylene-alpha-olefin copolymer has a $M_n$ of from 5,000 to 500,000.

EP-A-0 674 671 discloses gel-free dispersant additives for lubricating and fuel oil compositions comprising at least one adduct of (A) alpha-olefin homopolymer or interpolymer of 700 to 10,000 $\overline{M}_n$, free radically grafted with an average of from about 0.5 to about 5 carboxylic acid producing moieties per polymer chain, and (B) at least one non-aromatic nucleophilic post-treating reactant.

Copolymers of isomonoolefins and alkylstyrene are known. See, for example, European Patent Application 89 305 395.9 filed May 26, 1989 (Publication No. 0344021 published November 29, 1989).

U.S. Patent 3,236,917 discloses an elastomer of an ethylene and a higher alpha olefin crosslinked with an unsaturated acid or anhydride.

U.S. Patent 3,862,265 discloses a process for modifying polymers in the molten phase in an extruder.

It has now been found that certain copolymers of an isoolefin and a para-alkylstyrene can be grafted with specified unsaturated organic compounds to produce novel grafted polymers which are additionally useful for producing additives for fuels and lubricants.

### SUMMARY OF THE INVENTION

In accordance with the invention there is provided a grafted polymer derived from: (A) a copolymer selected from the group consisting of a copolymer of a $C_4$ to $C_7$ isomonoolefin and a para-alkylstyrene, a halogen-containing copolymer of a $C_4$ to $C_7$ isomonoolefin and a para-alkylstyrene, and mixtures thereof, and (B) an unsaturated organic compound selected from the group consisting of an unsaturated carboxylic acid, an unsaturated carboxylic acid anhydride, amide, imide and ester and mixtures thereof, wherein said grafted polymer has a number average molecular weight of less than 25,000. In another aspect of the invention there is provided an oil-soluble functionalized and grafted isomonoolefin-para-alkylstyrene copolymer composition prepared by functionalizing a starting copolymer having a number average molecular weight of 700 to 10,000, preferably from 800 to 5,500, e.g., 1,000 to 3,000.

The functlonalized and grafted copolymers may be further reacted with at least one nucleophilic post-treating reactant selected from (i) amines containing only a single reactive amino group per molecule, (ii) alcohols containing only a single hydroxy group per molecule, (iii) polyamines containing at least two reactive amino groups per molecule, (iv) polyols containing at

least two reactive hydroxy groups per molecule, (v) aminoalcohols containing at least one reactive amino group and at least one reactive hydroxy group per molecule, and (vi) mixtures of (i) to (v); provided that when said post-treating reactant includes one or more of (iii), (iv) or (v), the reaction between the functionalized and grafted copolymer and the post-treating reactant is conducted in the presence of sufficient chain-stopping or end-capping co-reactant to ensure that the functionalized, grafted and post-reacted product mixture is gel-free.

Further embodiments of the polymer composition are described in the dependent claims.

The process of this invention permits the preparation of particularly useful lubricating oil and fuel dispersant additives. In addition, the process of the present invention can produce such dispersant additives as substantially halogen free materials, thereby reducing the corrosivity, processing difficulties and environmental concerns which are associated with halogen-containing lubricating oil additives.

## DETAILED DESCRIPTION OF THE INVENTION

The grafted polymers of the present invention are reaction products of a copolymer (Reactant A) and an unsaturated organic compound (Reactant B).

### Reactant A - The Copolymer

Suitable copolymers of a $C_4$ to $C_7$ isomonoolefin and a para-alkylstyrene which may be a mono or a polypara-alkylstyrene, for use as a reactant to produce the polymers of the present invention composition comprise at least 0.5 weight percent of the alkylstyrene moiety. For the uses contemplated herein, the alkylstyrene moiety may range from 0.01 weight percent to 20 weight percent, preferably from 0.05 to 15 weight percent, more preferably from 0.1 to 15 weight percent, for example from 0.5 to 10 weight percent of the copolymer. The preferred copolymers are copolymers of a $C_4$ to $C_7$ isomonoolefin and a para-alkylstyrene.

The copolymers of the isomonoolefin and para-alkylstyrene monomers suitable as reactant A of the present invention include copolymers of isomonoolefin having from 4 to 7 carbon atoms and a para-alkylstyrene, such as those described in European patent application 89305395.9 filed May 26, 1989, (Publication No. 0344021 published November 29, 1989). The copolymers have a substantially homogeneous compositional distribution and include the para-alkylstyrene comonomers represented by the formula:

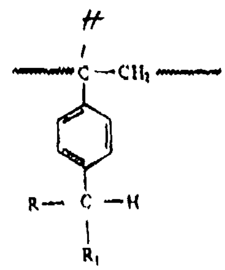

in which R and $R^1$ are independently selected from the group consisting of hydrogen, alkyl preferably having from 1 to 5 carbon atoms, primary haloalkyl, secondary haloalkyl preferably having from 1 to 5 carbon atoms, and mixtures thereof.

The preferred isomonoolefin comprises isobutylene. The preferred para-alkylstyrene comprises para-methylstyrene. Suitable copolymers of an isomonoolefin and a para-alkylstyrene include copolymers which when grafted according to the invention have a number average molecular, weight (Mn) of less than 25,000, preferably less than 24,000. The polymers employed in this invention generally possess a Mn of 700 to 10,000 (e.g., 1,000 to 8,000), preferably 800 to 5,500; more preferably 1,000 to 3,000 (e.g., 1,500 to 2,500). Polymers having a Mn weight of 700 to 5,000 (e.g., 1,000 to 3,000) are particularly useful in the present invention. The Mn for such polymers can be determined by several known techniques such as size exclusion chromatography (also known as gel permeation chromatography (GPC)) which also provides molecular weight distribution information. The copolymers also, preferably have a ratio of weight average molecular weight (Mw) to number average molecular weight (Mn), i.e., Mw/Mn of less than 6, preferably less than about 4, more preferably less than 2.5, most preferably less than 2. The brominated copolymer of the isoolefin and para-alkylstyrene obtained by the polymerization of these particular monomers under certain specific polymerization conditions now permit one to produce copolymers which comprise the direct reaction product (that is, in their as-polymerized form), and which have unexpectedly homogeneous uniform compositional distributions. Thus, by utilizing the polymerization and bromination procedures set forth herein, the copolymers suitable for the practice of the present invention can be produced. These copolymers demonstrate substantially homogeneous compositional distributions or compositional uniformity over the entire range of compositions thereof. At least 95 weight percent of the copolymer product has a para-alkylstyrene content within 10 wt. percent, and preferably within 7 wt. percent, of the average para-alkylstyrene content for the overall composition, and preferably at least 97 wt. percent of the copolymer product has a para-alkylstyrene content within 10 wt. percent and preferably within 7 wt. percent, of the average para-alkylstyrene content for the overall composition. This

substantially homogeneous compositional uniformity thus particularly relates to the intercompositional distribution. That is, with the specified copolymers, as between any selected molecular weight fraction the percentage of para-alkylstyrene therein, or the ratio of para-alkylstyrene to isoolefin, will be substantially the same, in the manner set forth above.

In addition, since the relative reactivity of para-alkylstyrene with isoolefin such as isobutylene is close to one, the intracompositional distribution of these copolymers will also be substantially homogeneous. That is, these copolymers are essentially random copolymers, and in any particular polymer chain the para-alkylstyrene and isoolefin units will be essentially randomly distributed throughout that chain.

Suitable halogen-containing copolymers of a $C_4$ to $C_7$ isomonoolefin and a para-alkylstyrene for use as reactant A to produce the polymers of the present invention include the halogen-containing copolymers corresponding to the previously described isomonoolefin - para-alkylstyrene copolymers which may be obtained by halogenating the previously described copolymers. The halogen content of the halogenated copolymers may range from above zero to 7.5 weight percent, preferably from 0.01 to 5.0 weight percent.

The preferred halogen-containing copolymers useful in the practice of the present invention have a substantially homogeneous compositional distribution and include the para-alkylstyrene moiety represented by the formula:

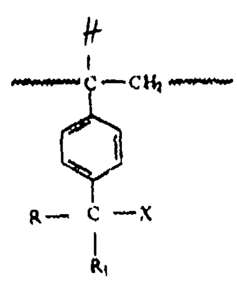

in which R and $R_1$ are independently selected from the group consisting of hydrogen, alkyl preferably having from 1 to 5 carbon atoms, primary haloalkyl, secondary haloalkyl preferably having from 1 to 5 carbon atoms, and mixtures thereof and X is selected from the group consisting of bromine, chlorine and mixtures thereof, such as those disclosed in European patent application 8930595.9 filed May 26 1989, (Publication No. 0344021 published November 29, 1989). Preferably, the halogen is bromine.

Various methods may be used to produce the copolymers of isomonoolefin and para-alkylstyrene, as described in said European publication. Preferably, the polymerization is carried out continuously in a typical continuous polymerization process using a baffled tank-type reactor fitted with an efficient agitation means, such as a turbo mixer or propeller, and draft tube, external cooling jacket and internal cooling coils or other means of removing the heat of polymerization, inlet pipes for monomers, catalysts and diluents, temperature sensing means and an effluent overflow to a holding drum or quench tank. The reactor is purged of air and moisture and charged with dry, purified solvent or a mixture of solvent prior to introducing monomers and catalysts. Reactors which are typically used in butyl rubber polymerization are generally suitable for use in a polymerization reaction to produce the desired para-alkylstyrene copolymers suitable for use in the process of the present invention. The polymerization temperature may range from 0°C to -100°C, preferably from -10 to -80°C. The process for producing the copolyrners can be carried out in the form of a slurry of polymer formed in the diluents employed, or as a homogeneous solution process. The use of a slurry process is, however, preferred for higher molecular weight copolymers, since in that case, lower viscosity mixtures are produced in the reactor and slurry concentration of up to 40 wt. percent of copolymer are possible.

The copolymers of isomonoolefins and para-alkylstyrene may be produced by admixing the isomonoolefin and the para-alkylstyrene in a copolymerization reactor under copolymerization conditions in the presence of a diluent and a Lewis acid catalyst. Typical examples of the diluents which may be used alone or in a mixture include propane, butane, pentane, cyclopentane, hexane, toluene, heptane, isooctane, etc., and various halohydrocarbon solvents which are particularly advantageous herein, including methylene chloride, chloroform, carbon tetrachloride, methyl chloride, with methyl chloride being particularly preferred.

An important element in producing the copolymer is the exclusion of impurities from the polymerization reactor, namely, impurities which, if present, will result in catalyst poisoning or excessive or variable molecular weight depression complexing with the catalyst or copolymerizatlon with the isomonoolefins or the para-alkylstyrene, which in turn will prevent one from producing the para-alkylstyrene copolymer product useful in the practice of the present invention. Most particularly, these impurities include the catalyst poisoning material, moisture and other copolymerizable monomers, such as, for example, meta-alkylstyrenes. These impurities should he kept out of the system. In producing suitable copolymers, it is preferred that the para-alkylstyrene be at least 95.0 wt. percent pure, preferably 97.5 wt. percent pure, most preferably 99.5 wt. percent pure and that the isomonoolefin be at least 99.5 wt. percent pure, preferably at least 99.8 wt. percent pure and that the diluents employed be at least 99 wt. percent pure, and preferably at least 99.8 wt. percent pure.

The most preferred Lewis acid catalysts are ethyl aluminum dichloride and preferably mixtures of ethyl aluminum dichloride with diethyl aluminum chloride. The amount of such catalysts employed will depend on the desired molecular weight and the desired molecular weight distribution of the copolymer being produced, but will generally range from 20 ppm to 1 wt. percent and preferably from 0.01 to 0.2 wt. percent, based upon the total amount of monomer to be polymerized.

Halogenation of the polymer can he carried out In the bulk or undiluted phase (e.g., melt or fluid phase) or either in solution or in a finely dispersed slurry. Bulk halogenation can be effected in an extruder, or other internal mixer, particularly if the copolymer molecular weight is sufficiently high, suitably modified to provide adequate mixing and for handling the halogen and corrosive by-products of the reaction. The details of such bulk halogenation processes are set forth in U.S. Patent No. 4,548,995.

Suitable solvents for solution halogenatlon include the low boiling hydrocarbons ($C_4$ to $C_7$) and halogenated hydrocarbons. Since the high boiling point of para-methylstyrene makes its removal by conventional distillation impractical, and since it is difficult to completely avoid solvent halogenation, it is very important where solution or slurry halogenation is to be used that the diluent and halogenation conditions be chosen to avoid diluent halogenation, and that residual para-methylstyrene has heen reduced to an acceptable level. With halogenation of para-methylstyrene/isobutylene copolymers, it is possible to halogenate the ring carbons, but the products are rather inert and of little interest. However, it is possible to introduce halogen desired functionality into the para-methylstyrene / isobutylene copolymers hereof in high yields and under practical conditions without obtaining excessive polymer breakdown, cross-linking or other undesirable side reactions. It should be noted that radical brominatlon of the enchained para-methylstyryl moiety in the copolymers for the practice of this invention can be made highly specific with almost exclusive substitution occurring on the paramethyl group, to yield the desired benzylic bromine functionality. The high specificity of the bromination reaction can thus be maintained over a broad range of reaction conditions, provided, however, that factors which would promote the ionic reaction route are avoided (i.e., polar diluents, Friedel-Crafts catalysts, etc.)

Thus, solutions of the suitable para-methylstyrene /isobutylene copolymers in hydrocarbon solvents such as pentane, hexane or heptane can be selectively brominated using light, heat, or selected radical initiators (according to conditions, i.e., a particular radical initiator must be selected which has an appropriate half-life for the particular temperature conditions being utilized, with generally longer half-lives preferred at warmer halogenation temperatures) as promoters of radical halogenation, to yield almost exclusively the desired benzylic bromine functionality, via substitution on the para-methyl group, and without appreciable chain scission and/or cross-linking.

This reaction can be initiated by formation of a bromine atom, either photochemically or thermally (with or without the use of sensitizers), or the radical initiator used can be one which preferentially reacts with a bromine molecule rather than one which reacts indiscriminately with bromine atoms, or with the solvent or polymer (i.e., via hydrogen abstraction). The sensitizers referred to are those photochemical sensitizers which will themselves absorb lower energy photons and disassociate, thus causing, in turn, disassociation of the bromine, including materials such as iodine. It is, thus, preferred to utilize an initiator which has a half life of between 0.5 and 2500 minutes under the desired reaction conditions, more preferably 10 to 300 minutes. The amount of initiator employed will usually vary between 0.02 and 1 percent by weight on the copolymer, preferably between 0.02 and 0.3 percent. The preferred initiators are bis azo compounds, such as azo bis isobutyronitrile (AIBN), azo bis (2,4 dimethyl valero) nitrile, azo bis (2 methyl butyro) nitrile, and the like. Other radical initiators can also be used, but it is preferred to use a radical initiator which is relatively poor at hydrogen abstraction, so that it reacts preferentially with the bromine molecules to form bromine atoms rather than with the copolymer or solvent to form alkyl radicals. In those cases, there would then tend to be resultant copolymer molecular weight loss, and promotion of undesirable side reactions, such as cross-linking. The radical bromination reaction of the copolymers of para-methylstyrene and isobutylene can be highly selective, and almost exclusively produces the desired benzylic bromine functionality. Indeed, the only major side reaction which appears to occur is disubstitution at the para-methyl group, to yield the dibromo derivative, but even this does not occur until more than 60 percent of the enchained para-methylstyryl moieties have been monosubstituted. Hence, any desired amount of benzylic bromine functionality in the monobromo form can be introduced into the above stated copolymers, up to 60 mole percent of the para-methylstyrene content.

It is desirable that the termination reactions be minimized during bromination, so that long, rapid radical chain reactions occur, and so that many benzylic bromines are introduced for each initiation, with a minimum of the side reactions resulting from termination. Hence, system purity is important, and steady-state radical concentrations must be kept low enough to avoid extensive recombination and possible cross-linking. The reaction must also be quenched once the bromine is consumed, so that continued radical production with resultant secondary reactions (in the absence of bromine) do not then occur. Quenching may be accomplished by cooling, turning off the light source, adding dilute caustic, the addition of a radical trap, or combinations thereof.

Since one mole of HBr is produced for each mole of bromine reacted with or substituted on the enchained para-methylstyryl moiety, it is also desirable to neutralize or otherwise remove this HBr during the reaction, or at least during polymer recovery in order to

prevent it from becoming involved in or catalyzing undesirable side reactions. Such neutralization and removal can be accomplished with a post-reaction caustic wash, generally using a molar excess of caustic on the HBr. Alternatively, neutralization can be accomplished by having a particulate base (which is relatively non-reactive with bromine) such as calcium carbonate powder present in dispersed form during the bromination reaction to absorb the HBr as it is produced. Removal of the HBr can also be accomplished by stripping with an inert gas (e.g., $N_2$) preferably at elevated temperatures.

The brominated, quenched, and neutralized para-methylstyrene / isobutylene copolymers can be recovered and finished using conventional means for polymers of the molecular weights herein to yield highly desirable and versatile functional saturated copolymers.

In summary, halogenation to produce a copolymer useful in the present invention is preferably accomplished by halogenating an isobutylene-para-methylstyrene copolymer using bromine in a normal alkane (e.g., hexane or heptane) solution utilizing a bis azo initiator, e.g., AIBN or VAZO® 52: 2,2'-azobis(2,4-dimethylpentane nitrite), at 55 to 80°C for a time period ranging from 4.5 to 30 minutes, followed by a caustic quench. The recovered polymer is washed in basic water wash and water/isopropanol washes, recovered, stabilized and dried.

Reactant B - The Unsaturated Organic Compound

Suitable unsaturated organic compound for use as reactant with the copolymer include unsaturated carboxylic acids, unsaturated carboxylic acid derivatives and mixtures thereof. The carboxylic acid may be a mono or polycarboxylic acid, preferably having from 3 to 12 carbon atoms. By way of example, the unsaturated carboxylic acid may be maleic acid, fumaric acid, citraconic acid, mesaconic acid, itaconic acid, himic acid, acetylenedicarboxylic acid and mixtures thereof. The preferred carboxylic acid is maleic acid. The unsaturated carboxylic acid derivative may be a cyclic acid anhydride, an amide, an imide, an ester and mixtures thereof. Suitable cyclic acid anhydrides include maleic anhydride, citraconic anhydride, itaconic anhydride, and himic anhydride. The preferred anhydride is maleic anhydride.

Suitable esters include mono- and di-esters of diacids specified above, e.g. monomethyl maleate, dimethyl maleate, diethyl maleate, diphenyl maleate, dibutyl fumarate.

Suitable amides include mono- and di-amides of diacids specified above, e.g. maleamic acid, N-methylmaleamic acid, maleanilic acid.

Suitable imides include imides of diacids specified above, e.g. maleimide, N-methylmaleimide, N-phenylmaleimide.

The preferred carboxylic acid derivatives are selected from the group consisting of maleic anhydride, a dialkyl maleate, itaconic anhydride, himic anhydride, an alkylmaleamide, an N-alkylmaleimide, an alkylmaleate and mixtures thereof.

Component (B) may be present in the grafted polymer of the present invention in an amount ranging from 0.5 to 0.0001 millimole (mmole) per gram, preferably from 0.15 to 0.0002 mmole per gram, more preferably from 0.10 to 0.0002 mmole per gram of the grafted polymer product.

The Process

The grafted copolymers of the present invention are prepared by reacting a copolymer, Reactant A previously described, with an unsaturated organic compound, Reactant B previously described, in the presence of a free radical initiator at grafting reaction conditions in a reaction zone. The copolymer of isobutylene and a para-alkylstyrene or the corresponding halogenated copolymer (Reactant A) is contacted with Reactant B in the presence of a free radical initiator which may be a chemical compound or radiation. Suitable free radical initiators include (1) thermally decomposable compounds which generate radicals such as azo compounds or organic peroxides; (2) compounds which generate free radicals by non-thermal methods such as photochemical or redox processes; (3) compounds which have inherent radical character such as molecular oxygen; or (4) electromagnetic radiation such as Y-rays, electron beams, visible light, and ultraviolet-light. Suitable organic peroxide compounds include hydroperoxides, dialkyl peroxides, dlacyl peroxides, peroxyesters, peroxydicarbonates, peroxyketals, ketone peroxides and organosulfonyl peroxides. Preferably, the free radical initiator is an organic peroxide compound having a half-life, at the reaction temperature, of less than one tenth of the reaction/residence time employed.

The resulting grafted polymer is characterized by having carboxylic acid (or ester or anhydride) moieties randomly attached along the polymer chains on the para-alkylstyrene moiety; it being understood, of course, that some of the polymer chains remain ungrafted to the extent that there are chains that, as a result of the random copolymerization, do not contain para-alkylstyrene. The unreacted polymer typically is not removed from the reaction mixture (because such removal is difficult and would be commercially infeasible) and the product mixture, stripped of any monounsaturated carboxylic reactant, is employed for further reactlon with at least one nucleophilic reactant, i.e., amine, alcohol or aminoalcohol, and sometimes with end-capping reactant, as described more fully hereinafter, to make the dispersant additives of this invention.

Characterization of the average number of moles of monounsaturated carboxylic reactant which have reacted per mole of copolymer charged to the reaction (whether such copolymer has undergone reaction or not) is defined herein as functionality, and such

functionality is based upon (i) determination of the saponifcation number of the resulting product mixture using potassium hydroxide; and (ii) the $M_n$ of the polymer charged, using techniques well known in the art. Functionality is defined solely with reference to the resulting product mixture. Although the amount of said reacted polymer contained in the resulting product mixture can be subsequently modified, i.e. increased or decreased by techniques known in the art, such modifications do not alter functionality as defined above. The terms "grafted isoolefin-para-alkylstyrene copolymer", "functionalized and grafted copolymers", "grafted copolymers" or the like, are intended to refer to the product mixture whether it has undergone such modification or not. Accordingly, the functionality of the isoolefin-para-alkylstyrene copolymer, which has been functionalized (selectively at para-alkylstyrene sites) with the monounsaturated carboxylic reactant, will be typically at least 0.5, preferably at least 0.8, and most preferably at least 0.9, and will vary typically from 0.5 to 5 (e.g, 0.6 to 4), preferably from 0.9 to 3.

The grafted polymer composition of the invention functionalized with a compound selected from unsaturated carboxylic acid, unsaturated carboxylic acid anhydride, amide, imide and ester and mixtures thereof, may be further functionalized so as to include at least one group selected from the group consisting of:

(a) alkyl phenol and substituted alkyl phenol;
(b) $C_3$ to $C_{10}$ monocarboxylic acid, $C_1$ to $C_5$ alcohol derived mono-or diester derivatives of said $C_3$ to $C_{10}$ monocarboxylic acid;
(c) $C_4$ to $C_{10}$ dicarboxylic acid or anhydride;
(d) $C_1$ to $C_5$ alcohol derived mono- or diester derivatives of said $C_4$ to $C_{10}$ dicarboxylic acid; and
(e) oxycarboxyl, carbonyl, formylcarbonyl, epoxy and hydroxy groups.

When the free radical initiator is a compound, suitable molar ratio of free radical initiator compound to Reactant B may range from 0.001:1 to 1:1, preferably from 0.01:1 to 0.1:1. Desirably, the molar amount of Reactant B expressed in mmoles per gram, in the contacting zone may be 1 to 10 times the molar amount of these components as is desired in the final grafted copolymer. Thus, when the molar amount of B in the grafted copolymer is 0.01 mmoles per gram of product polymer, the amount of B introduced in the reactant zone is suitably from about 0.01 to about 0.1 mmoles per gram of component A plus component B present in the reactant mixture.

The grafting reaction may be conducted in the absence of a diluent or in the present of a diluent. When a diluent is present in the reaction zone, suitable diluents include saturated aliphatic hydrocarbons, aromatic hydrocarbons, and perhalogenated hydrocarbons. Preferably, free-radical initiated grafting would be accomplished in a mineral lubricating oil solution containing, e.g, 1 to 50, preferably 5 to 30 wt % polymer based on the initial total oil solution.

The grafting reaction temperature is chosen to be appropriate for the initiator used. Suitable reaction conditions include a temperature ranging from 0°C to 300°C. The suitable reaction temperature will vary according to the free radical initiator used. When an azo compound is used as the initiator, suitable temperatures will generally range from 25 to 100°C, When an organic peroxide is used as initiator, suitable temperatures range from 25 to 250°C. Higher temperatures may be used for other types of free radical initiators. When the reaction is conducted in the presence of a diluent, i.e. solution processes, the reaction temperature will generally be below 150°C. For bulk phase processes, the reaction temperature may range from 25° such as in conventional electron beam irradiation equipment to 250°C such as in polymer mixing equipment. The process for producing the grafted polymers of the present invention may be conducted as a batch process or as a continuous process.

The reaction is performed in a suitable reaction zone which may be a polymer mixing device such as a tubular reactor, a single or multiple screw extruder and the like for melt phase polymers or a glass flask, metal tank or tube when the process is conducted in the presence of a diluent.

When the fluid copolymer itself is the reaction medium, uniform dispersion of the grafting agent and of the initiator is preferably performed by predispersion or by the incorporation of suitable mixing elements into the reactor (e.g., incorporation of mixing screw sections in an extruder, stirred tank or tubular reactor). When electromagnetic radiation is used, dispersion of the initiator will include uniform exposure of all parts of the copolymer or copolymer solution to the beam.

In a preferred embodiment, the grafting process to produce the grafted polymer of the invention is carried out in mixing device which will (i) mix and heat the copolymer by shear and compression to or close to the desired reaction temperature, (ii) mix the copolymer at or close to reaction temperature with the grafting agent, (iii) mix the copolymer containing the grafting agent with the initiator, (iv) allow appropriate residence time for the grafting reaction, (v) allow venting of unreacted grafting agent and initiator coproducts, (vi) allow mixing of any desired additional additives or reactants and (vii) deliver the reacted copolymer to an appropriate finishing device (e.g. drumming device, baler, pelletizer, etc.).

The isomonoolefin para-alkylstyrene copolymers of this invention which are charged to the reaction zone can be charged alone or together with (e.g., in admixture with) other polyalkenes derived from alkenes having from 1 to 20 carbon atoms (butene, pentene, octene, decene, dodecene, tetradodecene and the like) and homopolymers of $C_3$ to $C_{10}$, e.g., $C_2$ to $C_5$, monoolefins, and copolymers of $C_2$ to $C_{10}$, e.g., $C_2$ to $C_5$, mo-

noolefins, said additional polymer having a $M_n$ of at least about 900, and a molecular weight distribution of less than about 4.0, preferably less than 3.0 (e.g., from 1.2 to 2.8). Preferred such additional olefin polymers comprise a major molar amount of $C_2$ to $C_{10}$, e.g. $C_2$ to $C_5$ monoolefin. Such olefins include ethylene, propylene, butylene, isobutylene, pentene, octene-1, styrene, etc. Exemplary of the additionally charged homopolymers is polypropylene, polyisobutylene, and poly-n-butene as well as interpolymers of two or more of such olefins such as copolymers of: ethylene and propylene (prepared by conventional Ziegler-Natta methods as well as by the newer metallocene catalyzed polymerization methods, that is, ethylene-propylene or ethylene-butene-1 copolymers which are substantially saturated, (wherein less than about 10 wt. % of the polymer chains contain ethylenic unsaturation) as well as those in which substantially each polymer chain is terminally unsaturated; butylene and isobutylene; propylene and isobutylene; etc. Other copolymers include those in which a minor molar amount of the copolymer monomers, e.g., 1 to 10 mole %, is a $C_4$ to $C_{18}$ non-conjugated diolefin, e.g., a copolymer of isobutylene and butadiene; etc. The additional such olefin polymers charged to the reaction will usually have $M_n$ of at least about 700, more generally 1,200-5,000, more usually 1,500-4,000; particularly 1,500 to 3,000 with approximately one double bond per chain. An especially useful additional such polymer is terminally unsaturated ethylene-alpha-olefin copolymer (e.g., ethylene-butene-1) and/or polyisobutylene.

Nucleophilic Post-Treating Reactants

The isomonoolefin / para-alkylstyrene copolymer substituted (i.e., selectively functionalized and randomly grafted) with carboxylic acid producing moieties, i.e., acid, anhydride or ester moieties, prepared as described above, can be further reacted with at least one suitable nucleophilic post-treating reactant to form the novel dispersants of this invention. Such nucleophilic post-treating reactant is selected from (i) amines containing only a single reactive amino group per molecule, (ii) alcohols containing only a single hydroxy group per molecule, (iii) polyamines containing at least two reactive amino groups per molecule, (iv) polyols containing at least two reactive hydroxy groups per molecule, (v) aminoalcohols containing at least one reactive amino group and at least one reactive hydroxy group per molecule, and (vi) mixtures of (i) to (v); provided that when said post-treating reactant includes one or more of (iii), (iv) or (v), the reaction between the functionalized and grafted copolymer and the post-treating nucleophilic reactant is conducted in the presence of sufficient chain-stopping or end-capping co-reactant to ensure that the functionalized, grafted and post-reacted product mixture is gel-free.

The post-treating reactants of group (i), i.e. the amines having a single reactive amino group, generally comprise from 2 to 60, preferably 2 to 40 (e.g. 3 to 20), total carbon atoms and 1 to 12, preferably 2 to 12, and most preferably 2 to 6 nitrogen atoms in the molecule. These amines may be hydrocarbyl amines or may include other groups, e.g., alkoxy groups, amide groups, nitrile, imidazoline groups, morpholine groups and the like. The amines of group (i) may contain only one reactive (primary or secondary) amino group, and no other reactive groups may be present. As used in this disclosure, the term "reactive groups" is meant to describe nucleophilic groups, such as primary or secondary amino groups or hydroxy groups, which may react with the carboxylic acid producing moieties attached to the isomonoolefin copolymer, e.g., ester, amide, imide, oxazoline, etc., linkages. By using an amine having only a single reactive group as the nucleophilic reactant, cross-linking between the carboxylic acid (anhydride or ester) groups of the substituted isomonoolefin copolymer will be avoided. Polyamines containing a single primary amino group and 1 or more tertiary amino groups, such as N-(3-aminopropyl)morpholine, are the preferred amines of group (i).

Examples of group (i) amine compounds include N-(2-aminoethyl)morpholine; N,N-dimethylethylenediamine; N,N-diethylethylenediamine; N,N-dimethyl-1,3-propanediamine; and N-(aminomethyl)-pyridine.

The post-treating reactants in group (ii), i.e., alcohols having a single reactive hydroxy group per molecule, generally comprise from 4 to 8 carbon atoms and include, for example, $C_4$-$C_8$ aliphatic alcohols such as butanol, pentanol and hexanol. The use of alcohols having less than 4 carbon atoms generally is to be avoided because of their high volatility. Alcohols having more than about 8 carbon atoms generally are to be avoided since it is difficult to remove unreacted higher molecular weight alcohols from the post-reacted product and since the presence of unreacted higher molecular weight alcohols in the product mixture can result in dispersant additives having less favorable viscometric properties.

The post-treating reactants of group (iii), i.e. polyamines containing at least two reactive amino groups per molecule, generally comprise from 2 to 60, preferably 2 to 40 (e.g. 3 to 20), total carbon atoms and 2 to 12, preferably 2 to 9, and most preferably 3 to 9 nitrogen atoms per molecule. These amines may be hydrocarbyl amines or may be hydrocarbyl amines including other groups, e.g., alkoxy groups, amide groups, nitrile, imidazoline groups, morpholine groups and the like. Preferred amines of group (iii) are aliphatic saturated amines. The most preferred amines of the above type contain at least two primary amino groups and at least one, and preferably at least three, secondary amino groups.

Examples of suitable amines of group (iii) include: 1,2-diaminoethane; 1,3-diaminopropane; 1,4-diaminobutane; polyethylene amines such as diethylene triamine; poly-propylene amines such as 1,2-propylene

diamine; propylene triamine; N,N-di-(2-aminoethyl) ethylene diamine; di-, and tri-tallow amines and mixtures thereof. Other useful group (iii) amines include: alicyclic diamines such as 1,4-di(aminomethyl) cyclohexane, and heterocyclic nitrogen compounds such as imidazolines, and N-aminoalkyl piperazines. Examples of such amines include 2-pentadecyl imidazoline; N-(2-aminoethyl) piperazine. Examples of such amines include 2-pentadecyl imidazoline; N-(2-aminoethyl) piperazine; etc.

Commercial mixtures of amines may advantageously be used. Low cost poly(ethyleneamines) compounds averaging about 5 to 7 nitrogen atoms per molecule are available commercially under trade names such as "Polyamine H", "Polyamine 400", "Dow Polyamine E-100", etc.

Useful group (iii) amines also include polyoxyalkylene polyamines. The alkylene groups may be straight or branched chains containing 2 to 7, and preferably 2 to 4 carbon atoms. The polyoxyalkylene polyamines, preferably polyoxyalkylene diamines and polyoxyalkylene triamines, may have $M_n$'s ranging from 200 to 4000 and preferably 400 to 2000. The preferred polyoxyalkylene polyamines include the polyoxyethylene and polyoxypropylene diamines and the polyoxypropylene triamines having $M_n$'s ranging from 200 to 2000. The polyoxyalkylene polyamines are commercially available and may be obtained, for example, from the Jefferson Chemical Company, Inc. under the trade name "Jeffamines D-230, D-400, D-1000, D-2000, T-403", etc.

A particularly useful class of group (iii) amines comprise bis(p-amino cyclohexyl)methane (PACM) and oligomers and mixtures of PACM with isomers and analogs thereof containing on average, from 2 to 6 or higher (usually 3 to 4) cyclohexyl rings per PACM oligomer molecule. The total nitrogen content of the PACM oligomers will comprise generally from 8 to 16 wt. %, and preferably from 10 to 14 wt.%. The PACM oligomers can be obtained, e.g., by fractionation, or distillation, as a heavies by-product or bottoms from the PACM-containing product produced by high pressure catalytic hydrogenation of methylene-dianiline. The hydrogenation of methylene dianiline and the separation of PACM oligomers from the resulting hydrogenation product can be accomplished by known means.

Still another useful class of group (iii) amines are the polyamido and related amines, which comprise reaction products of a polyamine and an alpha, beta unsaturated compound. Any polyamine, whether aliphatic, cycloaliphatic, heterocyclic, etc., (but not aromatic) can be employed provided it is capable of adding across the acrylic double bond and amidifying with for example the carbonyl group of an acrylate-type compound or with a thiocarbonyl group of a thioacrylate-type compound.

The polyamido groups can comprise alkyl, cycloalkyl, or heterocyclic, which can be substituted with groups which are substantially inert to any component of the reaction mixture under conditions selected for preparation of the amido-amine. Such substituent groups include hydroxy, halide (e.g., Cl, F, I, Br), -SH and alkylthio. When one or more are alkyl, such alkyl groups can be straight or branched chain, and will generally contain from 1 to 20, more usually from 1 to 10, and preferably from 1 to 4, carbon atoms. Illustrative of such alkyl groups are methyl, ethyl, propyl, butyl, pentyl, hexyl, heptyl, octyl, nonyl, decyl, dodecyl, tridecyl, hexadecyl, octadecyl and the like. When one or more are cycloalkyl, the cycloalkyl group will generally contain from 3 to 12 carbon atoms, and preferably from 3 to 6 carbon atoms. Illustrative of such cycloalkyl groups are cyclopropyl, cyclobutyl, cyclohexyl, cyclooctyl, and cyclododecyl. When one or more are heterocyclic, the heterocyclic group generally consists of a compound having at least one ring of 6 to 12 members in which one or more ring carbon atoms is replaced by oxygen or nitrogen. Examples of such heterocyclic groups are furyl, pyranyl, pyridyl, piperidyl, dioxanyl, tetrahydrofuryl, pyrazinyl and 1,4-oxazinyl. Examples of the alpha, beta-ethylenically unsaturated carboxylate compounds are acrylic acid, methacrylic acid, the methyl, ethyl, isopropyl, n-butyl, and isobutyl esters of acrylic and methacrylic acids, 2-butenoic acid, etc.

The alpha, beta ethylenically unsaturated carboxylate thioester compounds may be employed. Examples of such alpha, beta-ethylenically unsaturated carboxylate thioesters are methylmercapto 2-butenoate, ethylmercapto 2-hexenoate, etc.

The alpha, beta ethylenically unsaturated carboxyamide compounds may be employed. Examples are 2-butenamide, 2-hexenamide, etc.

The alpha, beta ethylenically unsaturated thiocarboxylate compounds may be employed. Examples are 2-butenthioic acid, 2-hexenthioic acid, etc.

The alpha, beta ethylenically unsaturated dithioic acid and acid ester compounds may be employed. Examples are 2-butendithioic acid, 2-hexendithioic acid, etc.

The alpha, beta ethylenically unsaturated thiocarboxyamide compounds may be employed. Examples are 2-butenthioamide, 2-hexenthioamide, 2-decenthio-amide, 3-methyl-2-heptenthioamide, 3-methyl-2-butenthio-amide, 3-cyclohexyl-2-butenthioamide, 2-methyl-2-butenthioamide, 2-propyl-2-propenthioamide, 2-isopropyl-2-hexenthioamide, 2,3-dimethyl-2-butenthio-amide, 3-cyclo-hexyl-2-methyl-2-pententhioamide, N-methyl 2-butenthio-amide, N,N-diethyl 2-hexenthioamide, N-isopropyl 2-decenthioamide, N-tertiary butyl 2-propenthioamide, N-octadecyl 2-propenthioamide, N-N-didodecyl 2-decen-thioamide, N-cyclopropyl 2,3-dimethyl-2-butenthioamide, 2-propenthioamide, 2-methyl-2-propenthioamide, 2-ethyl-2-propenthioamide and the like.

Preferred compounds for reaction with the polyamines in accordance with this invention are lower alkyl esters of acrylic and (lower alkyl) substituted acrylic

acid. In the preferred embodiments these compounds are acrylic and methacrylic esters such as methyl or ethyl acrylate, methyl or ethyl methacrylate. When the selected alpha, beta-unsaturated compound contains oxygen, the resulting reaction product with the polyamine contains at least one amido linkage (-C(O) N<) and such materials are herein termed "amido-amines." Similarly, when the selected alpha, beta unsaturated compound contains sulfur, the resulting reaction product with the polyamine contains thioamide linkage (-C(S)N<) and these materials are herein termed "thioamido-amines."

The post-treating reactants in group (iv), i.e. the polyols containing at least two reactive hydroxy groups, generally comprise up to 100 carbon atoms and from 2 to 10, and preferably 3 to 8 hydroxy groups per molecule. These polyols can be quite diverse in structure and chemical composition. For example, they can be substituted or unsubstituted, hindered or unhindered, branched chain or straight chain, etc. as desired. Typical polyols are alkylene glycols such as ethylene glycol, propylene glycol, and polyglycol such as diethylene glycol and triethylene glycol and polyalkylene glycols in which the alkylene radical contains from two to eight carbon atoms. Other useful polyhydric alcohols include glycerol, monomethyl ether of glycerol, pentaerythritol, dipenta-erythritol, the ethyl ester of 9,10-dihydroxystearic acid, 3-chloro-1, 2-propanediol, 1,2-butanediol, pinacol, tetrahydroxy pentane, erythritol, 1,4-cyclohexanediol, the carbohydrates such as glucose, etc.

Included among the polyols which may be employed are the cyclic poly(methylol) compounds, such as 2,2,6,6-tetramethylol cyclohexanol, tetrahydro-3,3,5,5-tetrakis-(hydroxymethyl)-4-pyranol and tetrahydro-3,3,5-tris-(hydroxymethyl)-5-methyl-4-pyranol; and heterocyclic polyols.

The post-treating reactants in group (v), i.e. aminoalcohols having at least one reactive amino group and at least one reactive hydroxy group per molecule, include aminoalcohols containing up to about 50 total carbon atoms, preferably up to 10 total carbon atoms, from about 1 to 5 nitrogen atoms, preferably from 1 to 3 nitrogen atoms, and from about 1 to 15 hydroxyl groups, preferably from 1 to 5 hydroxyl groups. Preferred aminoalcohol compounds include the 2,2-disubstituted-2-amino-1-alkanols having from two to three hydroxy groups and containing a total of 4 to 8 carbon atoms. Examples of such amino alcohols include: 2-amino-2-methyl-1,3 propanediol, 2-amino-2-ethyl-1,3-propanediol, and 2-amino-2-(hydroxymethyl) 1,3-propanediol, the latter also being known as THAM or tris(hydroxymethyl)amino methane. THAM is particularly preferred because of its effectiveness, availability, and low cost.

The post-treating reactants (i) - (v) may be used alone or in admixture with one another. However, as will be discussed more fully hereinbelow, when the post-treating reactant comprises a polyfunctional compound, i.e. a compound containing more than one reactive group, regardless of whether such reactive group is an amino group or a hydroxy group, it is necessary to use sufficient chain-stopping or end-capping reactant in combination with the polyfunctional post-treating reactant to ensure that the grafted and post-reacted product mixture will be gel-free.

Chain-Stopping Reactant

The chain-stopping or end-capping reactants contemplated for use in this invention include monofunctional reactants which are capable of reacting with reactive amine groups or reactive hydroxy groups present in the polyfunctional post-treating reactants of groups (iii) - (v) or with the acid producing groups which are grafted or otherwise attached to the isomonoolefin copolymer to inhibit cross linking and gelation and/or viscosity increase due to any further reaction of unreacted amino groups or hydroxy groups in the grafted and aminated or esterified isomonoolefin copolymer. Preferred chain-stopping or end-capping reactants include, for example, hydrocarbyl substituted dicarboxylic anhydride or acid, preferably succinic anhydride or acid, having from 12 to 400 carbons in the hydrocarbyl group; long chain monocarboxylic acid of the formula RCOOH where R is a hydrocarbyl group of 12 to 400 carbons in the hydrocarbyl group; alcohol compounds of the type described above in connection with the nucleophilic post-treating reactants of group (ii), i.e., alcohol compounds having only a single hydroxy group per molecule; and amine compounds of the type described above in connection with the post-treating reactants of group (i), i.e., amine compounds having only a single reactive amine group per molecule. The hydrocarbyl groups are essentially aliphatic and include alkenyl and alkyl groups. The longer chain acids and anhydrides are preferred, particularly when the grafting reaction is carried out in lubricating oil because of their ability to impart dispersancy to reacted oil molecules as well as their greater solubilizing effect. In one preferred embodiment, the chain-stopping or end-capping reactant comprises a $C_{12}$ to $C_{49}$ hydrocarbyl substituted succinic anhydride, e.g. a $C_{12}$ to $C_{18}$ hydrocarbyl substituted succinic anhydride. In other preferred embodiments, the hydrocarbyl substituent contains from 50 to 400 carbon atoms.

Primarily because of its ready availability and low cost, the hydrocarbyl portion, e.g. alkenyl groups, of the carboxylic acid or anhydride is preferably derived from a polymer of a C2 to C5 monoolefin, said polymer generally having a $M_n$ of about 140 to 6500, e.g. 700 to 5000, most preferably 700 to 3000. Particularly preferred polymer is polyisobutylene. Particularly preferred chain-stopping reactants include polyisobutylene succinic anhydride wherein the $M_n$ of the polyisobutylene portion is from 700 to 2500.

Pre-Reacted Post-Treating Reactant/Chain-stopping Reactant

The aforesaid nucleophilic post-treating reactants (iii) - (v) having more than one reactive amino and/or hydroxy group and the chain-stopping or end-capping reactants may be pre-reacted with the chain-stopping or end-capping reactant generally being attached to the post-treating reactant through salt, imide, amide amidine, ester, or other linkages so that a single reactive group of the post-treating reactant is still available for reaction with the acid producing moieties of the grafted polymer. A convenient source of these prereacted materials are the well-known carboxylic acid derivatives such as succinimides used as lubricating oil dispersants, provided they retain reactive amine and/or hydroxy groups capable of further reaction with the grafted polymer.

Reaction of Polymer Substituted Mono- and Dicarboxylic Acid Material with Post-Treating Reactant

The selected polymer functionalized and grafted with acid producing moieties, e.g., isomonoolefin / paraalkylstyrene copolymer substituted succinic anhydride, can be reacted with any individual post-treating reactant (or post-treating reactant and chain-stopping or end-capping reactant) or any combination of two or more of any of these reactants; that is, for example, one or more monoreactive amines, monoreactive alcohols, polyamines, polyols and/or aminoalcohols can be used, so long as sufficient monoreactive reactant is used when a reactant having more than one reactive group is used, to ensure a gel-free reaction.

The reaction between the copolymer functionalized and grafted with acid producing moieties and the nucleophilic post-treating and/or chain-stopping or end-capping reactants is readily accomplished, for example, by heating a solution containing 5 to 95 wt. percent of the polymer in a substantially inert organic solvent or diluent at from 100 to 250°C, preferably 125 to 175°C, generally for 1 to 10, e.g., 2 to 6 hours until the desired amount of water is removed. Suitable diluents include, for example, aliphatic, cycloaliphatic, and aromatic hydrocarbons, as well as the corresponding halogenated hydrocarbons, particularly chlorinated hydrocarbons. These diluents are exemplified by benzene, toluene, xylene, chlorobenzenes, hexane, heptane, or mixtures of these. Mineral oils, particularly low viscosity mineral oils, are very good diluents. Preferred diluents are mineral oils of lubricating viscosity.

Reaction ratios of copolymer substituted with carboxylic acid material to equivalents of amine reactant, as well as the other nucleophilic post-treating reactants and chain-stopping or end-capping reactants described herein, can vary considerably, depending, e.g., on the reactants and type of bonds formed. Generally, when an amine compound or other nucleophilic reactant, is reacted with a polymer substituted with carboxylic acid material, i.e., polymer containing carboxylic acid producing moieties derived from any of the above monounsaturated carboxylic acids, or anhydride or ester derivatives thereof, from 0.05 to 4.0, preferably from 0.5 to 2.0, e.g., 0.6 to 1.5, moles of carboxylic acid moiety content (e.g., grafted maleic anhydride content) is used, per equivalent of nucleophilic reactant.

A preferred group of ashless dispersants, in accordance with the present invention, are those derived from isobutylene / paramethylstyrene copolymer substituted with succinic anhydride groups and reacted with polyethylene amines, e.g., tetraethylene pentamine, pentaethylene hexamine, polyoxyethylene or polyoxypropylene amines, e.g., polyoxypropylene diamine, and with polyisobutylene succinic anhydride chain-stopping reactant. Another preferred group of ashless dispersants are those derived from isobutylene / paramethylstyrene copolymer substituted with succinic anhydride groups and reacted with monofunctional heterocyclic amines, e.g., N-(3-aminopropyl)morpholine.

Oleaginous Compositions

The compositions of the present invention used as dispersants can be incorporated into a lubricating oil (or a fuel) in any convenient way. Thus, these dispersants can be added directly to the lubricating oil (or fuel) by dispersing or dissolving the same in the lubricating oil (or fuel) at the desired level of concentration of the dispersant, typically in an amount of from 0.01 to 49 wt. % of the lubricating oil (or fuel). Such blending into the additional lubricating oil (or fuel) can occur at room temperature or elevated temperatures.

Dispersant concentrates will typically contain (on an active ingredient (A.I.) basis) from about 3 to 45 wt.%, and preferably from 10 to 35 wt.%, dispersant additive, and typically from 30 to 90 wt.%, preferably from 40 to 60 wt.%, base oil, based on the concentrate weight.

The dispersant products of the present invention possess very good dispersant properties as measured herein in a wide variety of environments. When the products of this invention are incorporated into crude oil refinery process streams and other hydrocarbon fluid process streams, where they function as antifoulants, they will be generally used, e.g., in amounts of up to 100 ppm, e.g., 5 to 50 ppm, of the treated stream.

When the dispersant products of this invention are used in normally liquid petroleum fuels such as middle distillates boiling from 65° to 430°C, including kerosene, diesel fuels, home heating fuel oil, jet fuels, etc., a concentration of the additives in the fuel in the range of typically from 0.001 to 0.5, and preferably 0.005 to 0.15 weight percent, based on the total weight of the composition, will usually be employed. The properties of such fuels are well known as illustrated, for example, by ASTM Specifications D #396-73 (Fuel Oils) and D

#439-73 (Gasolines) available from the American Society for Testing Materials ("ASTM"). The fuel compositions of this invention can also contain other additives. These can include anti-knock agents, lead scavengers, deposit preventers or modifiers, dyes, cetane improvers, antioxidants rust inhibitors, bacteriostatic agents, gum inhibitors, metal deactivators, upper cylinder lubricants and the like.

The dispersant products of the present invention find their primary utility in lubricating oil compositions which employ a base oil in which the additives are dissolved or dispersed, often together with other conventional additives for such compositions. Such base oils may be natural or synthetic. Base oils suitable for use in preparing the lubricating oil compositions of the present invention include those conventionally employed as crankcase lubricating oils for spark-ignited and compression-ignited internal combustion engines, such as automobile and truck engines, marine and railroad diesel engines, and the like. Advantageous results are also achieved by employing the additive mixtures of the present invention in base oils conventionally employed in and/or adapted for use as power transmitting fluids, universal tractor fluids and hydraulic fluids, heavy duty hydraulic fluids, power steering fluids and the like. Gear lubricants, industrial oils, pump oils and other lubricating oil compositions can also benefit from the incorporation therein of the additive mixtures of the present invention.

The ashless dispersants of the present invention will be generally used in admixture with a lube oil basestock, comprising an oil of lubricating viscosity, including natural and synthetic lubricating oils and mixtures thereof. Natural oils include animal oils and vegetable oils (e.g., castor, lard oil) liquid petroleum oils and hydrorefined, solvent-treated or acid- treated mineral lubricating oils of the paraffinic, naphthenic and mixed paraffinic-naphthenic types. Oils of lubricating viscosity derived from coal or shale are also useful base oils. Alkylene oxide polymers and interpolymers and derivatives thereof where the terminal hydroxyl groups have been modified by esterification, etherification, etc., constitute another class of known synthetic lubricating oils. Another suitable class of synthetic lubricating oils comprises the esters of dicarboxylic acids. Esters useful as synthetic oils also include those made from $C_5$ to $C_{12}$ monocarboxylic acids and polyols and polyol ethers such as neopentyl glycol, etc. Silicon-based oils such as the polyalkyl-, polyaryl-, polyalkoxy-, or polyaryloxysiloxane oils and silicate oils comprise another useful class of synthetic lubricants. Unrefined, refined and rerefined oils can be used in the lubricants of the present invention.

Metal-containing rust inhibitors and/or detergents are frequently used with ashless dispersants. Such detergents and rust inhibitors include the metal salts of sulphonic acids, alkyl phenols, sulphurized alkyl phenols, alkyl salicylates, naphthenates, and other oil soluble mono- and di-carboxylic acids. Highly basic, that is overbased metal salts which are frequently used as detergents appear particularly prone to interaction with the ashless dispersant. Highly basic alkaline earth metal sulfonates are frequently used as detergents. According to a preferred embodiment the invention therefore provides a crankcase lubricating composition also containing from 2 to 8000 parts per million of calcium or magnesium.

A particular advantage of the dispersants of the invention is use with viscosity index improvers to form multi-grade automobile engine lubricating oils. Viscosity modifiers impart high and low temperature operability to the lubricating oil and permit it to remain relatively viscous at elevated temperatures and also exhibit acceptable viscosity or fluidity at low temperatures. Viscosity modifiers are generally high molecular weight hydrocarbon polymers including polyesters. The viscosity modifiers may also be derivatized to include other properties or functions, such as the addition of dispersancy properties. These oil soluble viscosity modifying polymers will generally have $M_n$'s of from $10^3$ to $10^6$, preferably $10^4$ to $10^6$, e.g., 20,000 to 250,000, as determined by gel permeation chromatography or osmometry.

Examples of suitable hydrocarbon polymers include homopolymers and copolymers of two or more monomers of $C_2$ to $C_{30}$, e.g. $C_2$ to $C_8$ olefins, including both alpha olefins and internal olefins, which may be straight or branched, aliphatic, aromatic, alkyl-aromatic, cycloaliphatic, etc. Frequently they will be of ethylene with $C_3$ to $C_{30}$ olefins, particularly preferred being the copolymers of ethylene and propylene. Other polymers can be used such as polyisobutylenes, homopolymers and copolymers of $C_6$ and higher alpha olefins. The preferred hydrocarbon polymers are ethylene copolymers containing from 15 to 90 wt.% ethylene, preferably 30 to 80 wt.% of ethylene and 10 to 85 wt.%, preferably 20 to 70 wt.% of one or more $C_3$ to $C_{28}$, preferably $C_3$ to $C_{18}$, more preferably $C_3$ to $C_8$, alpha-olefins.

Dihydrocarbyl dithiophosphate metal salts are frequently used as anti-wear agents and also provide antioxidant activity. The zinc salts are most commonly used in lubricating oil in amounts of 0.1 to 10, preferably 0.2 to 2 wt. %, based upon the total weight of the lubricating oil composition. They may be prepared in accordance with known techniques by first forming a dithiophosphoric acid, usually by reaction of an alcohol or a phenol with $P_2S_5$ and then neutralizing the dithiophosphoric acid with a suitable zinc compound. The antioxidants useful in this invention include oil soluble copper compounds. The copper may be blended into the oil as any suitable oil-soluble copper compound. By oil-soluble we mean the compound is oil soluble under normal blending conditions in the oil or additive package.

Corrosion inhibitors, also known as anti-corrosive agents, reduce the degradation of the metallic parts contacted by the lubricating oil composition. Illustrative of corrosion inhibitors are phosphosulfurized hydrocarbons and the products obtained by reaction of a phosphosulfurized hydrocarbon with an alkaline earth metal oxide or hydroxide, preferably in the presence of an alkylated phenol or of an alkylphenol thioester, and also preferably in the presence of carbon dioxide.

Oxidation inhibitors reduce the tendency of mineral oils to deteriorate in service which deterioration can be evidenced by the products of oxidation such as sludge and varnish-like deposits on the metal surfaces and by viscosity growth. Such oxidation inhibitors include alkaline earth metal salts of alkylphenolthioesters having preferably $C_5$ to $C_{12}$ alkyl side chains, calcium nonylphenol sulfide, barium t-octylphenyl sulfide, dioctylphenylamine, phenylalphana-phthylamine, phosphosulfurized or sulfurized hydro-carbons, etc.

Friction modifiers serve to impart the proper friction characteristics to lubricating oil compositions such as automatic transmission fluids. Representative examples of suitable friction modifiers are fatty acid esters, amides; and molybdenum complexes of polyisobutenyl succinic anhydride-amino alkanols.

Pour point depressants lower the temperature at which the lubricating oil will flow or can be poured. Foam control can be provided by an antifoamant of the polysiloxane type, e.g. silicone oil and polydimethyl siloxane. Organic, oil-soluble compounds useful as rust inhibitors in this invention comprise nonionic surfactants such as polyoxyalkylene polyols and esters thereof. Other suitable demulsifiers include esters. The liquid polyols available from Wyandotte Chemical Co. under the name Pluronic Polyols and other similar polyols are particularly well suited as rust inhibitors.

These compositions of our invention may also contain other additives and other metal containing additives, for example, those containing barium and sodium. The lubricating composition of the present invention may also include copper lead bearing corrosion inhibitors. Typically such compounds are the thiadiazole polysulphides containing from 5 to 50 carbon atoms, their derivatives and polymers thereof. Preferred materials are the derivatives of 1,3,4-thiadiazoles; especially preferred is the compound 2,5 bis (t-octadithio)-1,3,4-thiadiazole commercially available as Amoco 150. Other suitable additives are the thio and polythio sulphenamides of thiadiazoles such as those described in GB-A-1560830. Some of these numerous additives can provide a multiplicity of effects, e.g., a dispersant-oxidation inhibitor. When these various additives are included in a lubricating composition, it is preferred that they be present in a total amount from 0.01 to 10, preferably 0.1 to 5.0 weight percent based on the weight of the final composition.

When a number of additives are employed, it may be desirable, although not necessary, to prepare additive concentrates comprising concentrated solutions or dispersions of the novel dispersants of this invention together with one or more of said other additives whereby several additives can be added simultaneously to the base oil to form the lubricating oil composition. It is common practice to introduce the additives in the form of 10 to 80 wt. %, e.g., 20 to 80 wt. % active ingredient concentrates in hydrocarbon oil, e.g. mineral lubricating oil, or other suitable solvent. Dissolution of the additive concentrate into the lubricating oil may be facilitated by solvents and by mixing accompanied with mild heating, but this is not essential.

All of said weight percents expressed herein (unless otherwise indicated) are based on active ingredient (A.I.) content of the additive, and/or upon the total weight of any additive-package, or formulation which will be the sum of the A.I. weight of each additive plus the weight of total oil or diluent. The following examples are provided by way of illustration only.

Comparative Example and Example 1

For comparative purposes, polyisobutylene ($M_n$ = 1000) is charged to a reactor and brought to 210°C by external heating and internal mixing. Maleic anhydride (0.51 mmole/g of reaction mixture) is added followed by the peroxide . Mixing at 210°C with is continued for 3 minutes, timed from the addition of the peroxide. The recovered material is heated in a vacuum oven at 140°C for 18 hours to remove unreacted maleic anhydride. Its infrared spectrum shows small bands due to grafted maleic anhydride and maleic acid at about 1790 and 1715 $cm^{-1}$, respectively. The acid is the minor component and its presence is attributed hydrolysis of the anhydride by atmospheric moisture. The ratio of the sum of the absorbances of these two bands to that of a typical polyisobutylene band at about 950 $cm^{-1}$ is used as a measure of the functionality introduced into the polymer. By comparison of this ratio with the similar ratio for a series of blends of dodec-2-enylsuccinic anhydride and polyisobutylene, an estimate of the sum of the grafted maleic anhydride and maleic acid content of the recovered material is obtained. Similarly, samples of isobutylene / paramethylstyrene copolymer containing approximately 5 and 7.5 wt. % paramethylstyrene and having a number average molecular weight of 1000 are grafted with maleic anhydride according to the procedure of the comparative example, above. The estimated grafting efficiencies achieved for the paramethylstyrene copolymers exceed that of the polyisobutylene polymer.

Example 2

Amination with an amine which contains only 1 reactive nitrogen.

Separately, 200 gms of each of the modified paramethylstyrene copolymers of Example 1 are placed in a suitable glass reactor. N-(3-aminopropyl) morpholine is added to the reactor corresponding approximately to stoichiometric equivalence to grafted maleic anhydride and the temperature increased to 160°C. Stirring

of the mixture is continued for 3 hours, and then a stream of nitrogen is maintained through the reaction mixture to remove unreacted N-(3-aminopropyl) morpholine and water of reaction. The temperature is then raised to 180°C for 30 minutes to complete the removal. The reaction products are gel-free imide products which are effective as dispersants.

Example 3

Amination with a polyamine and a chain stopper (polyisobutanyl succinic anhydride).

Separately, 200 gms of each of the modified paramethylstyrene copolymers of Example 1 are placed in a suitable glass reactor equipped with adequate stirring. The reactor is purged with nitrogen for 30 minutes and the contents are heated to about 100°C. About 350 gms of polyisobutenyl succinic anhydride having an ASTM, D-64 Sap. No. 112 which are diluted with 350 gms of solvent 100N diluent oil are added to the polymer with stirring and the temperature is raised to about 190°C. The reaction mixture is held at that temperature with nitrogen stripping for 3 hours, followed by cooling. The resulting product is a viscous liquid substantially free of gel.

## Claims

1. A grafted polymer composition comprising (A) a copolymer selected from the group consisting of a copolymer of a $C_4$ to $C_7$ isomonoolefin and a para-alkylatyrene, a halogen-containing copolymer of a $C_4$ to $C_7$ isomonoolefin and a para-alkylstyrene, and mixtures thereof; and grafted thereto, (B) an unsaturated organic compound which grafts to said para-alkyl group bonded at the styrene ring of the copolymer, the compound selected from the group consisting of an unsaturated carboxylic acid, an unsaturated carboxylic acid anhydride, amide, imide and ester and mixtures thereof, wherein said grafted polymer has a number average molecular weight of less than 25,000.

2. The grafted polymer of Claim 1, wherein said copolymer (A) is selected from the group consisting of a copolymer of isobutylene and para-methylstyrene, a halogen-containing copolymer of isobutylene and para-methylstyrene and mixtures thereof.

3. The grafted polymer of Claim 2, wherein said number average molecular weight is from 500 to 24,000.

4. The grafted polymer of Claim 1 wherein said unsaturated organic compound in a carboxylic acid selected from the group consisting of a $C_3$ to $C_{12}$ monocarboxylic acid, a $C_3$ to $C_{12}$ polycarboxylic acid and mixtures thereof.

5. The grafted polymer of Claim 4, wherein said carboxylic acid is a polycarboxylic acid selected from the group consisting of maleic acid, fumaric acid, citraconic acid, mesaconic acid, itaconic acid, himic acid, acetylenedicarboxylic acid and mixtures thereof.

6. The grafted polymer of Claim 1, wherein said unsaturated organic compound is selected from the group consisting of maleic anhydride, himic anhydride, itaconic anhydride, mono-esters of diacids, di-esters of diacids, mono-amides of diacids, diamides of diacids, imides of diacids, and mixtures thereof.

7. An oil-soluble functionalized and grafted $C_4$ to $C_7$ isomonoolefin / para-alkylstyrene copolymer composition prepared by grafting onto said p-alkyl group of said copolymer, mono- or dicarboxylic acid producing moieties having 1 to 2 carboxylic acid-producing groups per moiety such that said functionalized and grafted copolymer contains an average of 0.5 to 5 grafted acid producing moieties per polymer chain, and wherein said grafted copolymer has a number average molecular weight of less than 25,000.

8. A process for producing a grafted polymer composition comprising reacting; (A) a copolymer selected from the group consisting of a copolymer of a $C_4$ to $C_7$ isomonoolefin and a para-alkylstyrene, a halogen-containing copolymer of a $C_4$ to $C_7$ isomonoolefin and a para-alkylstryrene, and mixtures thereof, with; (B) an unsaturated organic compound selected from the group consisting of an unsaturated carboxylic acid, an unsaturated carboxylic acid anhydride, amide, imide and ester and mixtures thereof, in the presence of a free radical initiator, wherein said grafted polymer has a number average molecular weight of less than 25,000.

9. The process of Claim 8, wherein said free radical initiator is a compound selected from the group consisting of organic peroxides, molecular oxygen and mixtures thereof.

10. The process of Claim 8, wherein said free radical initiator is an electromagnetic radiation source.

11. The process of claim 8, wherein the number average molecular weight of said grafted polymer is from 500 to 24,000.

12. The process of Claim 8, wherein said reaction is conducted in the presence of a diluent or wherein

said copolymer A is in the fluid state.

**13.** The process of claim 8, wherein said reaction step is carried out at a temperature of between 0°C and 300°C.

**14.** The process of Claim 8, wherein said copolymer A is selected from the group consisting of a copolymer of isobutylene and para-methylstyrene, a bromine-containing copolymer of isobutylene and para-methylstyrene, and mixtures thereof.

**15.** The process of Claim 8 or Claim 14, wherein said unsaturated organic compound is selected from the group consisting of maleic anhydride, N-ethylmaleimide and mixtures thereof.

**16.** The grafted polymer composition of claim 3, said grafted copolymer further functionalized so as to include at least one group selected from the group consisting of:

(a) alkyl phenol and substituted alkyl phenol;
(b) $C_3$ to $C_{10}$ monocarboxylic acid, $C_1$ to $C_5$ alcohol derived mono- or diester derivatives of said $C_3$ to $C_{10}$ monocarboxylic acid;
(c) $C_4$ to $C_{10}$ dicarboxylic acid or anhydride;
(d) $C_1$ to $C_5$ alcohol derived mono- or diester derivatives of said $C_4$ to $C_{10}$ dicarboxylic acid; and
(e) oxycarboxyl, carbonyl, formylcarbonyl, epoxy and hydroxyl groups.

**17.** The grafted polymer composition of claim 16, said grafted copolymer further comprising the reaction product of at least one functional group and a derivative reactant compound.

**18.** A lubricating oil concentrate containing from 10 to 80 wt % of the polymer composition as recited in claim 3.

**19.** A lubricating oil composition containing from 0.1 to 20 wt % of the polymer composition as recited in claim 3.

**20.** The derivatized copolymer of claim 17 in which the functionalized copolymer is reacted with at least one nucleophilic reagent selected from amines, alcohols, metal reactants, and mixtures thereof.

**21.** A derivatized copolymer comprising the reaction product of functionalized copolymer of claim 16, further alkylated with

(a) at least one alkyl-substituted hydroxyaromatic compound formed by the alkylation of at least one hydroxy aromatic compound with a copolymer as claimed in claim 3;
(b) at least one aldehyde reactant; and
(c) at least one nucleophilic reactant.

**22.** A lubricating oil composition comprising a major amount of a lubricating base oil, lubricating oil flow improver, and a minor amount of oil soluble grafted copolymer as claimed in any of claims 1 to 3.

**23.** The lubricating oil composition of claim 22, containing from 0.01 to 5 weight percent of the lubricating oil flow improver and from 0.1 to 20 weight percent of said grafted copolymer, based on the total weight of the composition.

**24.** A lubricating oil composition comprising base oil and, as a dispersant additive, a functionalized or derivatized grafted copolymer as claimed in any of claims 16 or 21, in the form of either:

(a) a concentrate containing from 11 to 80 weight percent of the dispersant additive; or
(b) a composition containing from 0.1 to 10 weight percent of the dispersant additive.

**Patentansprüche**

**1.** Gepfropfte Polymerzusammensetzung, die (A) Copolymer ausgewählt aus der Gruppe bestehend aus Copolymer von $C_4$- bis $C_7$- Isomonoolefin und para-Alkylstyrol, halogenhaltigem Copolymer von $C_4$- bis $C_7$-Isomonoolefin und para-Alkylstyrol und Mischungen derselben, und darauf aufgepfropft (B) ungesättigte organische Verbindung umfaßt, die auf die an den Styrolring des Copolymers gebundene para-Alkylgruppe aufpfropft und ausgewählt ist aus der Gruppe bestehend aus ungesättigter Carbonsäure, ungesättigtem Carbonsäureanhydrid, -amid, -imid und -ester sowie Mischungen derselben, wobei das gepfropfte Polymer ein durchschnittliches Molekulargewicht (Zahlenmittel) von weniger als 25 000 hat.

**2.** Gepfropftes Polymer nach Anspruch 1, bei dem das Copolymer (A) ausgewählt ist aus der Gruppe bestehend aus Copolymer von Isobutylen und para-Methylstyrol, halogenhaltigem Copolymer von Isobutylen und para-Methylstyrol und Mischungen derselben.

**3.** Gepfropftes Polymer nach Anspruch 2, bei dem das durchschnittliche Molekulargewicht (Zahlenmittel) 500 bis 24 000 beträgt.

**4.** Gepfropftes Polymer nach Anspruch 1, bei dem die ungesättigte organische Verbindung eine Carbonsäure ausgewählt aus der Gruppe bestehend aus

$C_3$- bis $C_{12}$-Monocarbonsäure, $C_3$- bis $C_{12}$-Polycarbonsäure und Mischungen derselben ist.

**5.** Gepfropftes Polymer nach Anspruch 4, bei dem die Carbonsäure eine Polycarbonsäure ausgewählt aus der Gruppe bestehend aus Maleinsäure, Fumarsäure, Citraconsäure, Mesaconsäure, Itaconsäure, Bicyclo[2.2.1]hept-5-en-2,3-dicarbonsäure, Acetylendicarbonsäure und Mischungen derselben ist.

**6.** Gepfropftes Polymer nach Anspruch 1, bei dem die ungesättigte organische Verbindung ausgewählt ist aus der Gruppe bestehend aus Maleinsäureanhydrid, Bicyclo[2.2.1]hept-5-en-2,3-dicarbonsäureanhydrid, Itaconsäureanhydrid, Monoestern von Disäuren, Diestern von Disäuren, Monoamiden von Disäuren, Diamiden von Disäuren, Imiden von Disäuren und Mischungen derselben.

**7.** Öllösliche funktionalisierte und gepfropfte $C_4$- bis $C_7$-Isomonoolefin/para-Alkylstyrol-Copolymerzusammensetzung, die hergestellt ist, indem auf die p-Alkylgruppe des Copolymers Mono- oder Dicarbonsäure erzeugende Anteile mit 1 bis 2 carbonsäureerzeugenden Gruppen pro Anteil aufgepfropft werden, so daß das funktionalisierte und gepfropfte Copolymer durchschnittlich 0,5 bis 5 gepfropfte säureerzeugende Anteile je Polymerkette enthält und wobei das gepfropfte Copolymer ein durchschnittliches Molekulargewicht (Zahlenmittel) von weniger als 25 000 hat.

**8.** Verfahren zur Herstellung von gepfropfter Polymerzusammensetzung, bei dem (A) Copolymer ausgewählt aus der Gruppe bestehend aus Copolymer von $C_4$- bis $C_7$-Isomonoolefin und para-Alkylstyrol, halogenhaltigem Copolymer von $C_4$- bis $C_7$-Isomonoolefin und para-Alkylstyrol und Mischungen derselben mit (B) ungesättigter organischer Verbindung ausgewählt aus der Gruppe bestehend aus ungesättigter Carbonsäure, ungesättigtem Carbonsäureanhydrid, -amid, -imid und -ester sowie Mischungen derselben in Gegenwart von freiradikalischem Initiator umgesetzt wird, wobei das gepfropfte Polymer ein durchschnittliches Molekulargewicht (Zahlenmittel) von weniger als 25 000 hat.

**9.** Verfahren nach Anspruch 8, bei dem der freiradikalische Initiator eine Verbindung ausgewählt aus der Gruppe bestehend aus organischen Peroxiden, molekularem Sauerstoff und Mischungen derselben ist.

**10.** Verfahren nach Anspruch 8, bei dem der freiradikalische Initiator eine Quelle für elektromagnetische Strahlung ist.

**11.** Verfahren nach Anspruch 8, bei dem das durchschnittliche Molekulargewicht (Zahlenmittel) des gepfropften Polymers 500 bis 24 000 beträgt.

**12.** Verfahren nach Anspruch 8, bei dem die Reaktion in Gegenwart von Verdünnungsmittel durchgeführt wird oder bei dem sich Copolymer A in fließfähigem Zustand befindet.

**13.** Verfahren nach Anspruch 8, bei dem die Reaktionsstufe bei einer Temperatur zwischen 0°C und 300°C durchgeführt wird.

**14.** Verfahren nach Anspruch 8, bei dem Copolymer A ausgewählt ist aus der Gruppe bestehend aus Copolymer von Isobutylen und para-Methylstyrol, bromhaltigem Copolymer von Isobutylen und para-Methylstyrol und Mischungen derselben.

**15.** Verfahren nach Anspruch 8 oder Anspruch 14, bei dem die ungesättigte organische Verbindung ausgewählt ist aus der Gruppe bestehend aus Maleinsäureanhydrid, N-Ethylmaleimid und Mischungen derselben.

**16.** Gepfropfte Polymerzusammensetzung nach Anspruch 3, bei der das gepfropfte Copolymer zusätzlich funktionalisiert ist, so daß es mindestens eine Gruppe ausgewählt aus der Gruppe bestehend aus

(a) Alkylphenol und substituiertem Alkylphenol,
(b) $C_3$- bis $C_{10}$-Monocarbonsäure, von $C_1$- bis $C_5$-Alkohol abgeleiteten Mono- oder Diesterderivaten der $C_3$- bis $C_{10}$-Monocarbonsäure,
(c) $C_4$- bis $C_{10}$-Dicarbonsäure oder -anhydrid,
(d) von $C_1$- bis $C_5$-Alkohol abgeleiteten Mono- oder Diesterderivaten der $C_4$- bis $C_{10}$-Dicarbonsäure, und
(e) Oxycarboxyl-, Carbonyl-, Formylcarbonyl-, Epoxy- und Hydroxylgruppen

einschließt.

**17.** Gepfropfte Polymerzusammensetzung nach Anspruch 16, bei der das gepfropfte Copolymer ferner das Reaktionsprodukt von mindestens einer funktionellen Gruppe und einer Derivatreaktantverbindung umfaßt.

**18.** Schmierölkonzentrat, das 10 bis 80 Gew.% der Polymerzusammensetzung gemäß Anspruch 3 enthält.

**19.** Schmierölzusammensetzung, die 0,1 bis 20 Gew. % der Polymerzusammensetzung gemäß Anspruch 3 enthält.

**20.** Derivatisiertes Copolymer nach Anspruch 17, bei

dem das funktionalisierte Copolymer mit mindestens einem nukleophilen Reagenz ausgewählt aus Aminen, Alkoholen, Metallreaktanten und Mischungen derselben umgesetzt ist.

**21.** Derivatisiertes Copolymer, das das Reaktionsprodukt von funktionalisiertem Copolymer gemäß Anspruch 16 umfaßt, das ferner alkyliert ist mit

(a) mindestens einer alkylsubstituierten hydroxyaromatischen Verbindung, die durch die Alkylierung von mindestens einer hydroxyaromatischen Verbindung mit Copolymer gemäß Anspruch 3 gebildet ist,
(b) mindestens einem Aldehydreaktanten und
(c) mindestens einem nukleophilen Reaktanten.

**22.** Schmierölzusammensetzung, die eine größere Menge Schmierbasisöl, Schmierölfließverbesserer und eine geringere Menge öllösliches gepfropftes Copolymer gemäß einem der Ansprüche 1 bis 3 enthält.

**23.** Schmierölzusammensetzung nach Anspruch 22, die, bezogen auf das Gesamtgewicht der Zusammensetzung, 0,01 bis 5 Gew.% des Schmierölfließverbesserers und 0,1 bis 20 Gew.% des gepfropften Copolymers enthält.

**24.** Schmierölzusammensetzung, die Basisöl und als Dispergiermitteladditiv funktionalisiertes oder derivatisiertes gepfropftes Copolymer gemäß einem der Ansprüche 16 oder 21 umfaßt und in Form von

(a) Konzentrat, das 11 bis 80 Gew.% des Dispergiermitteladditivs enthält, oder
(b) einer Zusammensetzung vorliegt, die 0,1 bis 10 Gew.% des Dispergiermitteladditivs enthält.

## Revendications

**1.** Composition de polymère greffé comprenant (A) un copolymère choisi dans le groupe consistant en un copolymère d'une isomono-oléfine en $C_4$ à $C_7$ et d'un para-alkylstyrène, un copolymère halogéné d'une isomono-oléfine en $C_4$ à $C_7$ et d'un para-alkylstyrène, et des mélanges de ces copolymères ; auxquels est greffé (B) un composé organique non saturé qui se greffe au groupe para-alkyle lié au noyau de styrène du copolymère, ce composé étant choisi dans le groupe consistant en un acide carboxylique non saturé, un anhydride, amide, imide et ester d'acide carboxylique non saturé et des mélanges de ces composés, le polymère greffé ayant un poids moléculaire en moyenne numérique inférieur à 25 000.

**2.** Polymère greffé suivant la revendication 1, dans lequel le copolymère (A) est choisi dans le groupe consistant en un copolymère d'isobutylène et de para-méthylstyrène, un copolymère halogéné d'isobutylène et de para-méthylstyrène et des mélanges de ces copolymères.

**3.** Polymère greffé suivant la revendication 2, dans lequel le poids moléculaire en moyenne numérique va de 500 à 24 000.

**4.** Polymère greffé suivant la revendication 1, dans lequel le composé organique non saturé est un acide carboxylique choisi dans le groupe consistant en un acide monocarboxylique en $C_3$ à $C_{12}$, un acide polycarboxylique en $C_3$ à $C_{12}$ et des mélanges de ces acides.

**5.** Polymère greffé suivant la revendication 4, dans lequel l'acide carboxylique est un acide polycarboxylique choisi dans le groupe consistant en l'acide maléique, l'acide fumarique, l'acide citraconique, l'acide mésaconique, l'acide itaconique, l'acide himique, l'acide acétylènedicarboxylique et des mélanges de ces acides.

**6.** Polymère greffé suivant la revendication 1, dans lequel le composé organique non saturé est choisi dans le groupe consistant en l'anhydride maléique, l'anhydride himique, l'anhydride itaconique, des mono-esters de diacides, des diesters de diacides, des mono-amides de diacides, des diamides de diacides, des imides de diacides et des mélanges de ces composés.

**7.** Composition de copolymère isomono-oléfine en $C_4$ à $C_7$/para-alkylstyrène soluble dans l'huile, fonctionnalisé et greffé, obtenue par greffage sur le groupe para-alkyle du copolymère, de fragments producteurs d'acide monocarboxylique ou dicarboxylique portant 1 à 2 groupes producteurs d'acide carboxylique pour chaque fragment, de manière que le copolymère fonctionnalisé et greffé contienne en moyenne 0,5 à 5 fragments greffés producteurs d'acide par chaîne de polymère, et le copolymère greffé a un poids moléculaire en moyenne numérique inférieur à 25 000.

**8.** Procédé de production d'une composition de polymère greffé, comprenant la réaction : (A) d'un copolymère choisi dans le groupe consistant en un copolymère d'une isomono-oléfine en $C_4$ à $C_7$ et d'un para-alkylstyrène, un copolymère halogéné d'une isomono-oléfine en $C_4$ à $C_7$ et d'un para-alkylstyrène, et des mélanges de ces copolymères, avec (B) un composé organique non saturé choisi dans le

groupe consistant en un acide carboxylique non saturé, un anhydride, amide, imide ou ester d'acide carboxylique non saturé et des mélanges de ces composés, en présence d'un initiateur de radicaux libres, le polymère greffé ayant un poids moléculaire en moyenne numérique inférieur à 25 000.

**9.** Procédé suivant la revendication 8, dans lequel l'initiateur de radicaux libres est un composé choisi dans le groupe consistant en peroxydes organiques, oxygène moléculaire, et leurs mélanges.

**10.** Procédé suivant la revendication 8, dans lequel l'initiateur de radicaux libres est une source de rayonnement électromagnétique.

**11.** Procédé suivant la revendication 8, dans lequel le poids moléculaire en moyenne numérique du polymère greffé va de 500 à 24 000.

**12.** Procédé suivant la revendication 8, dans lequel la réaction est conduite en présence d'un diluant ou dans lequel le copolymère (A) est à l'état fluide.

**13.** Procédé suivant la revendication 8, dans lequel l'étape réactionnelle est conduite à une température comprise entre 0°C et 300°C.

**14.** Procédé suivant la revendication 8, dans lequel le copolymère (A) est choisi dans le groupe consistant en un copolymère d'isobutylène et de para-méthylstyrène, un copolymère bromé d'isobutylène et de para-méthylstyrène, et leurs mélanges.

**15.** Procédé suivant la revendication 8 ou la revendication 14, dans lequel le composé organique non saturé est choisi dans le groupe consistant en l'anhydride maléique, le N-éthylmaléimide et des mélanges de ces composés.

**16.** Composition de polymère greffé suivant la revendication 3, dans laquelle le copolymère greffé est en outre fonctionnalisé de manière à contenir au moins un groupe choisi dans la série consistant en :

(a) un alkylphénol et un alkylphénol substitué ;
(b) un acide monocarboxylique en $C_3$ à $C_{10}$, des mono-esters ou diesters d'alcools en $C_1$ à $C_5$ de cet acide monocarboxylique en $C_3$ à $C_{10}$ ;
(c) un acide ou anhydride d'acide dicarboxylique en $C_4$ à $C_{10}$ ;
(d) des mono-esters ou diesters d'alcools en $C_1$ à $C_5$ de cet acide dicarboxylique en $C_4$ à $C_{10}$ ; et
(e) les groupes oxycarbonyle, carbonyle, formylcarbonyle, époxy et hydroxyle.

**17.** Composition de polymère greffé suivant la revendication 16, dans laquelle le copolymère greffé est en outre constitué par, ou contient le, produit de réaction d'au moins un groupe fonctionnel et d'un dérivé réactionnel.

**18.** Concentré d'huile lubrifiante contenant 10 à 80 % en poids de la composition de polymère suivant la revendication 3.

**19.** Composition d'huile lubrifiante contenant 0,1 à 20 % en poids de la composition de polymère suivant la revendication 3.

**20.** Copolymère dérivatisé suivant la revendication 17, dans lequel le copolymère fonctionnalisé est mis en réaction avec au moins un réactif nucléophile choisi entre des amines, des alcools, des corps réactionnels métalliques et des mélanges de ces réactifs.

**21.** Copolymère dérivatisé comprenant le produit de réaction du copolymère fonctionnalisé suivant la revendication 16, alkylé en outre avec

(a) au moins un composé hydroxyaromatique à substituant alkyle formé par l'alkylation d'au moins un composé aromatique hydroxylé avec un copolymère suivant la revendication 3 ;
(b) au moins un aldéhyde réactionnel ; et
(c) au moins un corps réactionnel nucléophile.

**22.** Composition d'huile lubrifiante comprenant une quantité dominante d'une huile lubrifiante de base, d'un agent améliorant l'écoulement d'une huile lubrifiante et d'une quantité secondaire d'un copolymère greffé soluble dans l'huile suivant l'une quelconque des revendications 1 à 3.

**23.** Composition d'huile lubrifiante suivant la revendication 22, contenant 0,01 à 5 % en poids de l'agent améliorant l'écoulement d'une huile lubrifiante et 0,1 à 20 % en poids du copolymère greffé, sur la base du poids total de la composition.

**24.** Composition d'huile lubrifiante comprenant une huile de base et, comme additif dispersant, un copolymère greffé fonctionnalisé ou dérivatisé suivant l'une quelconque des revendications 16 ou 21, sous forme :

(a) d'un concentré contenant 11 à 80 % en poids de l'additif dispersant ; ou
(b) d'une composition contenant 0,1 à 10 % en poids de l'additif dispersant.